# EUROPÄISCHE PATENTSCHRIFT

(11) **EP 1 720 226 B1**
(45) Veröffentlichungstag und Bekanntmachung des Hinweises auf die Patenterteilung: **12.03.2008**
(21) Anmeldenummer: 05008507.5
(22) Anmeldetag: 19.04.2005
(51) Int. Cl.: H02B 1/56, B65B 65/00, B65B 29/02, B65B 9/20, B65B 57/00

(54) **Verpackungsmaschine**
Packaging machine
Machine d'emballage

(43) Veröffentlichungstag der Anmeldung: 08.11.2006
(73) Patentinhaber: TEEPACK SPEZIALMASCHINEN GMBH & CO. KG, D-40667 Meerbusch (DE)
(72) Erfinder: Vits, Dieter, 41470 Neuss (DE); Hauers, Manfred, 41749 Viersen (DE); Lambertz, Stefan, Dr., 50354 Hürth (DE)
(74) Vertreter: Grünecker, Kinkeldey, Stockmair & Schwanhäusser Anwaltssozietät

(56) Entgegenhaltungen:
- EP-A- 1 093 199
- DE-U1- 29 813 790
- US-A1- 2003 010 051

## Beschreibung

Die vorliegende Erfindung betrifft eine Verpackungsmaschine mit einer Steuer- und Antriebseinrichtung, wobei die Antriebseinrichtung wenigstens einen fluidgekühlten Motor umfasst und die Steuereinrichtung in einem einem Gestell der Verpackungsmaschine zugeordneten Schaltschrank angeordnet ist.

Moderne Verpackungsmaschinen weisen heutzutage eine Steuereinrichtung zur Steuerung von Aktoren der Verpackungsmaschine in Abhängigkeit von den Betriebsbedingungen bzw. Betriebsparametern der Verpackungsmaschine auf. Diese Steuereinrichtung wirkt auch auf die Antriebseinrichtung der Verpackungsmaschine. Häufig weist die Antriebseinrichtung Servomotoren auf. Diese werden mitunter zyklisch hin- und herbewegt und werden mit Rücksicht auf die dabei entstehende Verlustwärme regelmäßig gekühlt, wobei Hochleistungsservomotoren durch eine Kühlflüssigkeit gekühlt werden können, die in das Gehäuse des Servomotors eingeleitet wird.

Solche fluidgekühlten Servomotoren werden beispielsweise bei Hochleistungsverpackungsmaschinen wie vertikalen Schlauchbeutelmaschinen eingesetzt. Die Steuer- bzw. Regelungseinrichtung zu der Antriebseinrichtung weist heutzutage Hochleistungsschaltelemente auf, die eine gewisse Verlustwärme erzeugen. Üblicherweise ist die Steuer- bzw. Regelungseinrichtung zu der Antriebseinrichtung in einem Schaltschrank aufgenommen. Insbesondere bei einer kompakten Ausgestaltung der Verpackungsmaschine wird dieser Schaltschrank dem Gestell der Verpackungsmaschine zugeordnet. Dementsprechend bilden die Verpackungsmaschinen mit ihrem Gestell und der Schaltschrank vorzugsweise eine bauliche Einheit aus. Die Verlustwärme der Steuer- und Regeleinrichtung wird üblicherweise konvektiv abgeführt und der Steuerschrank hat entsprechende Lufteinlass- und Auslassöffnungen. Bei geschlossenen Ausführungsformen wird ein Wärmetauscher an die Außenwand des Steuerschranks angeordnet, der die Verlustwärme abführt.

Mit zunehmender Komplexität elektronischer Steuerungselemente steigt auch die Bedeutung der Kühlung derselben. Ohne entsprechende Kühlung können diese Elemente nicht störungsfrei arbeiten. Die konvektiv abzugebende Wärme kann aber beschränkt sein, beispielsweise bei einem Betrieb der Verpackungsmaschine in einer warmen Umgebung. Darüber hinaus kann auch durch das zu verpackende Gut die maximale Wärmeabgabe beschränkt sein. So können nicht sämtliche Güter, die in einer Verpackungsmaschine verpackt werden, ohne Beeinträchtigung höheren Temperaturen ausgesetzt werden. Genannt seien hierbei insbesondere wärmeempfindliche Lebens- oder Arzneimittel.

Aus der DE 298 13 790 U1 ist eine Schaltschrankvorrichtung bekannt, bei welcher ein Wärmetauscher über Anschlüsse mit einer Rückkühlungseinrichtung verbunden ist. Bei diesem bekannten Schaltschrank ist parallel bebastandet zu der Seitenwand dem Innenraum des Schrankkorpus zugekehrt eine Zwischenwand angeordnet und in diesem Zwischenraum, der von der Seitenwand und von der Zwischenwand umschlossen ist, ist eine Klimatisierungseinrichtung angeordnet.

Die vorliegende Erfindung wurde mit Rücksicht auf die vorstehend dargestellten Bedingungen gemacht und ihr liegt das Problem zugrunde, eine Verpackungsmaschine anzugeben, deren Steuereinrichtung bei Vermeidung einer unzulässigen Erwärmung der Umgebung hinreichend gekühlt ist und welche einen kompakten Aufbau aufweist.

Zur Lösung dieses Problems wird in der vorliegenden Erfindung eine Verpackungsmaschine mit den Merkmalen für Anspruch 1 angegeben. Bei der erfindungsgemäßen Verpackungsmaschine ist in dem Schaltschrank ein fluidgekühlter Wärmetauscher aufgenommen, welcher die Verlustwärme der Steuereinrichtung aufnimmt. Der Wärmetauscher ist ein Gas-Fluid-Wärmetauscher und nimmt die konvektiv über das in dem Schaltschrank befindliche Gas geförderte Wärme auf und überträgt diese an das Fluid. Hierdurch wird sichergestellt, dass die Steuerungselemente der Steuerungs- und Regelungseinrichtung zuverlässig gekühlt werden. Vorzugsweise befindet sich der Wärmetauscher in unmittelbarer Nachbarschaft zu der Steuerungseinrichtung. Mit dem Wärmetauscher kommuniziert eine Rückkühlungseinrichtung zum Abkühlen des Fluids. Diese Rückkühlungseinrichtung ist vorzugsweise als separates Element ausgebildet, d.h. nicht der Verpackungsmaschine bzw. im Gestell derselben unmittelbar zugeordnet. Erfindungsgemäß kommuniziert die Rückkühlungseinrichtung sowohl mit dem Wärmetauscher als auch dem Motor. Mit anderen Worten wird mit der vorliegenden Erfindung vorgeschlagen, sowohl die Verlustwärme der Steuerungs- bzw. Antriebseinrichtung wie auch die Verlustwärme, z.B. von Servomotoren über einen einheitlichen Kühlkreislauf abzuführen. In diesem wird das Kühlmittel bzw. -fluid in der Rückkühlungseinrichtung heruntergekühlt und durch Aufnahme von Abwärme der Steuerungselektronik in dem Wärmetauscher einerseits und zur Aufnahme der Reibungswärme des Servomotors in demselben andererseits erwärmt.

Im Hinblick auf eine möglichst einfache Führung des Kühlungsfluids und eine sichere Durchströmung des wenigstens einen Servomotors und des Wärmetauschers und dementsprechend im Hinblick auf eine sichere Wärmeabfuhr an sämtlichen zu kühlenden Anlagenteilen der Verpackungsmaschine wird gemäß einer weiteren bevorzugten Ausgestaltung der vorliegenden Erfindung vorgeschlagen, den Wärmetauscher und den wenigstens einen Servomotor hinsichtlich des Kühlfluids in Reihe zu schalten. Dabei ergibt sich in Kombination mit einer Ausgestaltung, bei der das Gestell der Verpackungsmaschine lediglich einen Kühlfluideingang und lediglich einen Kühlfluidausgang aufweist, eine relativ einfache und damit kostengünstige Ausgestaltung. Sind mehrere zu kühlende Servomotoren vorgesehen, werden diese vorzugsweise parallel geschaltet.

Im Hinblick auf einen einfachen Anschluss der Kühlfluidleitungen des Maschinengestells an die Rückkühlungseinrichtung wird gemäß einer bevorzugten Weiterbildung der vorliegenden Erfindung vorgeschlagen, den Kühlfluideingang bzw. den Kühlfluidausgang jeweils mit einem Schlauchanschluss auszubilden, an den ein das Kühlfluid von der Rückkühlungseinrichtung zu dem Maschinengestell fördernder Kühlfluidschlauch jeweils auf einfache Weise angeschlossen werden kann.

Mit Rücksicht auf eine einfache und kompakte Ausbildung der Verpackungsmaschine und zur bestmöglichen Abschirmung der Steuer- und Antriebselemente der Verpackungsmaschine wird gemäß einer weiteren bevorzugten Ausgestaltung der vorliegenden Erfindung vorgeschlagen, sowohl die Steuerelemente als auch die Antriebselemente in dem Schaltschrank aufzunehmen. Im Hinblick auf die unterschiedlichen Anforderungen hinsichtlich Montage und Instandhaltung sowie Pflege der unterschiedlichen Anlagenteile wird gemäß der Erfindung in dem Schaltschrank eine Trennwand vorgesehen, welchen einen die Steuerungselemente aufnehmenden Bereich von einem den wenigstens einen Servomotor, gegebenenfalls weitere Antriebs- und Bewegungselemente der Verpackungsmaschine aufnehmenden Bereich unterteilt. Diese Trennwand ist vorzugsweise so ausgestaltet, dass bei Montagearbeiten an dem Servomotor bzw. Schmierungs- und Wartungsarbeiten an beweglichen Teilen der Verpackungsmaschine, die ebenfalls innerhalb des Schaltschrankes in dem den Servomotor aufnehmenden Bereich aufgenommen sein können, die Gefahr einer Beschädigung der Bauteile der Steuerungseinrichtung vermieden wird. Ferner wird durch die Trennwand sichergestellt, dass der an den innerhalb des Schaltschrankes angeordneten Antriebs- und Bewegungselementen der Verpackungsmaschine arbeitende Monteur mit den stromführenden Teilen der Maschine nicht in Berührung kommen kann und/oder einen Kurzschluss im Bereich der Steuerung verursacht.

Bei einer möglichen Ausgestaltung befindet sich der Wärmetauscher in dem die Steuerungselemente des Schaltschrankes aufnehmenden Bereich und Kühlfluid führende Schläuche sind durch die Trennwand zu dem wenigstens einen Servomotor hindurchgeführt. Bei einer alternativen Ausgestaltung befindet sich der Wärmetauscher in dem den wenigstens einen Servomotor aufnehmenden Bereich und die Trennwand weist Konvektionsöffnungen auf, die eine konvektive Wärmeübertragung von dem die Steuerungselemente aufnehmenden Bereich zu dem den wenigstens einen Servomotor aufnehmenden Bereich ermöglichen. Die Trennwand ist hierbei vorzugsweise so ausgestaltet, dass bei einer eventuellen Leckage von Kühlfluid dieses nicht zu dem die Steuerungseinrichtung aufnehmenden Bereich gelangen kann, so dass die Steuerungselemente sicher vor verspritzendem oder ausfließendem Kühlfluid geschützt sind.

Im Hinblick auf eine gute Wärmeabfuhr der Verlustwärme wird gemäß einer weiteren bevorzugten Ausgestaltung der vorliegenden Erfindung vorgeschlagen, der Trennwand wenigstens ein Mittel zur Erzeugung einer erzwungenen Konvektion zuzuordnen. Vorzugsweise befindet sich wenigstens ein Lüfter Durchgangsöffnung in der Trennwand und ferner eine weitere Lüftungsöffnung, die eine Zirkulation zwischen dem den Servomotor aufweisenden Bereich und dem die Steuerelemente aufweisenden Bereich ermöglicht.

Hierbei ist vorzugsweise der Kühlfluideingang und der Kühlfluidausgang dem den Servomotor aufnehmenden Bereich zugeordnet. Mit Rücksicht auf eine möglichst platzsparende Anordnung der Einrichtungen zum Anschluss und Weiterführen des Kühlfluids befindet sich der Kühlfluideingang sowie der Kühlfluidausgang auf der Unterseite eines Bodens des Schaltschrankes. Damit einher geht der weitere Vorteil, dass der Anschluss der Leitungen, die zu der Rückkühlungseinrichtung führen, bei geschlossenem Schaltschrank und ohne Beeinträchtigung der in dem Schaltschrank aufgenommenen Anlagen- und Steuerungsteile erfolgen kann. Für einen kompakten Aufbau der Verpackungsmaschine und insbesondere im Hinblick auf die Anordnung von durch den wenigstens einen Servomotor angetriebenen und in dem Schaltschrank angeordneten Aktoren wird gemäß einer bevorzugten Weiterbildung vorgeschlagen, den Schaltschrank in das Maschinengestell zu integrieren. Der Schaltschrank kann insbesondere als Gehäuse für die Verpackungsmaschine ausgebildet sein und wesentliche Anlagenteile in sich aufnehmen, insbesondere solche Anlagenteile, vor denen der Benutzer der Verpackungsmaschine geschützt werden soll. Bei dieser Ausbildung bildet der Schaltschrank vorzugsweise einen Teil des Maschinengestells aus und bildet den Rahmen bzw. An-und Auflageflächen für wesentliche Teile der Verpackungsmaschine, und zwar sowohl auf der Innenseite der Wände des Schaltschrankes wie auch an den entsprechenden Außenseiten.

Weitere Einzelheiten und Vorteile der vorliegenden Erfindung ergeben sich aus der nachfolgenden Beschreibung in Verbindung mit der Zeichnung. In dieser zeigen:
- Figur 1: eine perspektivische Ansicht eines Ausführungsbeispiels einer erfindungsgemäßen Verpackungsmaschine;
- Figur 2: den Schlitten und dessen Lagerung zur Bewegung der Schweißeinrichtung des in Figur 1 gezeigten Ausführungsbeispiels; und

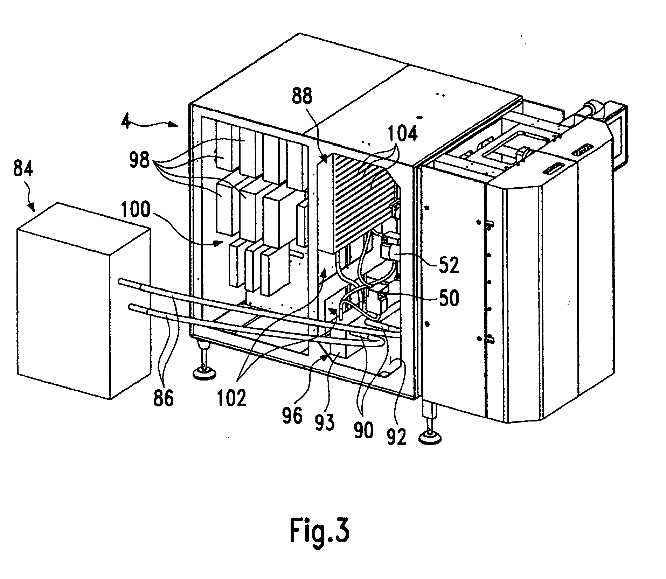

- Figur 3: den Schalt- bzw. Antriebsschrank des in den Figuren 1 und 2 dargestellten Ausführungsbeispiels bei weggenommenen Schranktüren.

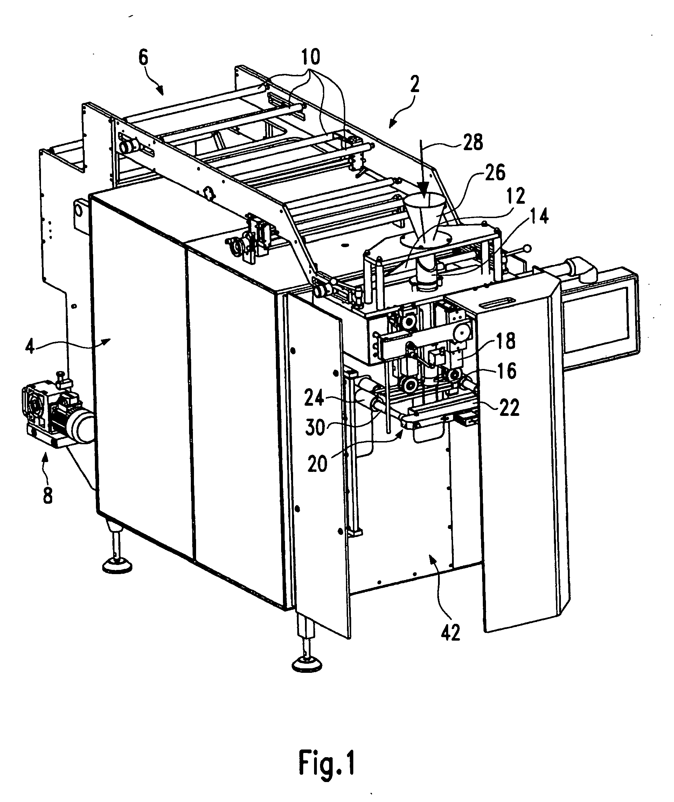

In Fig. 1 ist eine perspektivische Ansicht eines Ausführungsbeispiels einer erfindungsgemäßen Verpackungsmaschine mit einem im wesentlichen U-förmigen Maschinengestell 2 und einem innerhalb dieses Maschinengestells 2 aufgenommenen Schalt- und Antriebsschrank 4 gezeigt. Das Maschinengestell 2 bildet in seinem hinteren Teil eine nicht näher zu erkennende Zuführeinrichtung 6 für einen Hüllstoff aus. Die Zuführeinrichtung 6 umfasst eine verdrehfest in eine Rolle des Hüllstoffs einbringbare Welle, die mit einem seitlich zu erkennenden Zuführmotor 8 angetrieben wird. Der Hüllstoff wird über verschiedene Umlenkrollen 10 oberhalb des Schalt- und Antriebsschrankes 4 geführt, bis zu einem Kragen 12, über den die eben Bahn des Hüllstoffes zu einem sich in vertikaler Richtung bewegenden Schlauch umgelenkt wird. Hinter dem Kragen 12 wird der Schlauch um ein Füllrohr 14 mit rechteckigem Querschnitt geführt. An gegenüberliegenden Längsseiten des Füllrohres 14 befinden sich angetriebene Abzugsbänder 16, welche eine Fördereinrichtung zu dem Schlauch ausbilden. An der vorderen, sich rechtwinklig hierzu erstreckenden Stirnseite des rechteckigen Füllrohres 14 befindet sich eine Längsschweißeinrichtung 18, welche die übereinander gelegten Ränder der Hüllstoffbahn zur Ausbildung eines umfänglich geschlossenen Schlauches verschweißt. Darunter ist eine Querschweißeinrichtung 20 mit einer vorderen Schweißbacke 22 und einer hinteren Schweißbacke 24 zu erkennen.

In Verlängerung des Füllrohres 14 und über dem Kragen 12 befindet sich ein Trichter 26, durch welchen von einer nicht dargestellten Wiege- und Dosiereinrichtung abgeworfenes Schüttgut intermittierend in das Füllrohr 24 abgeworfen werden kann. Die vertikale Bewegungsbahn des abgeworfenen Schüttgutes ist mit Pfeil 28 gekennzeichnet.

Die jeweiligen Schweißbacken 22, 24 sind endseitig jeweils mit Stempeln 30, 32 verbunden, von denen lediglich die der vorderen Schweißbacke 22 zugeordneten Stempel 30 in Fig. 1 zu erkennen sind. Die hintere Schweißbacke 24 ist kürzer als die vordere Schweißbacke 22 und liegt dementsprechend zwischen den Stempeln 30.

Die in Fig. 1 gezeigte Vorrichtung ermöglicht das Abpacken von Schüttgütern in Schlauchbeuteln. Hierzu wird Hüllstoff kontinuierlich über den Kragen 12 zu einem Schlauch geformt. Unterhalb des Füllrohres 14 wird der Schlauch durch Aufeinanderzubewegen der beiden Schweißbacken 22, 24 geklemmt und verschweißt. Während die Schweißbacken 22, 24 wirksam sind, wird über den Trichter 26 eine vorbestimmte Menge an Schüttgut abgeworfen. Dieser füllt den nun endseitig geschlossenen Schlauch. Währenddessen wandert der Schlauch mit seiner unteren Schweißnaht kontinuierlich in vertikaler Richtung nach unten. Sobald die Schweißnaht die notwendige Festigkeit erreicht hat, wird die Querschweißeinrichtung 20 geöffnet. Die Querschweißeinrichtung 20 wird entgegen der Bewegungsrichtung des Schlauches nach oben gefahren und oberhalb des Schüttgutes an den Schlauch angelegt. Die obere Schweißnaht des Beutels wird ausgebildet und hierdurch der Beutel verschlossen; zeitgleich wird hierbei die untere Schweißnaht des nächsten Beutels ausgebildet. Eine in Bewegungsrichtung des Schlauches etwa mittig an einer der Schweißbacken 22 vorgesehenen Trenneinrichtung, beispielsweise ein Messer, wird nun betätigt, um den geschlossenen Schlauchbeutel von dem bereits unterseitig geschlossenen Schlauch zu trennen.

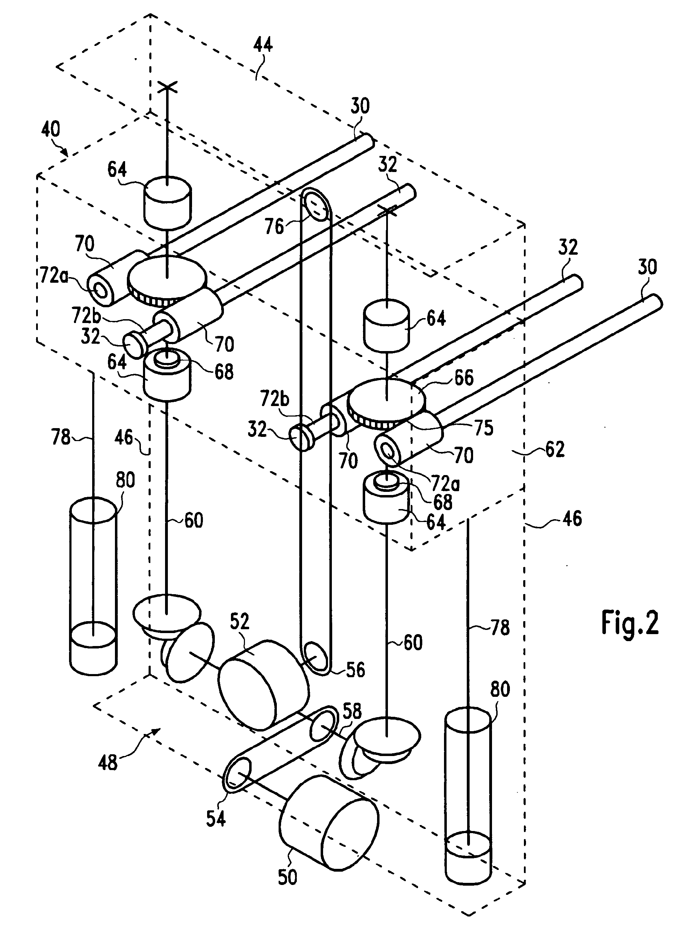

Wie sich aus der vorstehenden Beschreibung der grundsätzlichen Funktionsweise der vertikalen, kontinuierlich arbeitenden Schlauchbeutelmaschine ergibt, verfährt die Querschweißeinrichtung 20 intermittierend in vertikaler Richtung von einer oberen Position, in der die Querschweißeinrichtung 20 die obere Querschweißnaht eines gefüllten Schlauchbeutels und gleichzeitig die untere Querschweißnaht des nächsten Schlauchbeutels bildet, an dem Hüllstoff anliegend zu einer unteren Position. Dort werden die beiden Schweißbacken 22, 24 voneinander entfernt und die Querschweißeinrichtung 20 fährt nun entlang des sich weiter kontinuierlich nach unten bewegenden Hüllstoffs zurück in die obere Position. Dementsprechend ist die Querschweißeinrichtung 20 beim Erstellen von geschlossenen Schlauchbeuteln Beschleunigungsvorgängen ausgesetzt. Im Hinblick auf eine möglichst schnelle Beschleunigung der Querschweißeinrichtung 20 weist das gezeigte Ausführungsbeispiel einen Schlitten 40 auf, der in dem Schalt- und Antriebsschrank 20 angeordnet ist und dessen Einzelheiten in Fig. 2 dargestellt sind.

Die in Fig. 2 gezeigte Baueinheit befindet sich unmittelbar auf der Rückseite der in Fig. 1 gezeigten Wand 42 des Schalt- und Antriebsschrankes 2. Die Baueinheit besteht aus einer Traverse 44, die über zwei seitliche Stützen 46 an einem fest mit dem Maschinengestell 2 verbundenen Antriebsmodul 48 befestigt ist. Das Antriebsmodul 48 weist einen Stellelementantrieb 50 sowie einen Schlittenantrieb 52 auf. Beide Antriebe 50, 52 sind als Servomotoren ausgebildet und übertragen das Drehmoment über Zahnriemen 54, 56. Über den Zahnriemen 54 treibt der Stellantrieb 50 eine in dem Antriebmodul 48 gelagerte, sich horizontal erstreckende Stellantriebsverteilerwelle 58 an. Die Stellantriebsverteilerwelle 58 hat an ihren jeweiligen Enden Kegelräder, die mit Kegelrädern von sich in vertikaler Richtung erstreckenden Wellen 60 kämmen. Die Wellen 60 sind mit ihren jeweiligen Ende einerseits in dem Antriebsmodul 48 und andererseits in der Traverse 44 frei drehbar gelagert. Zwischen diesen endseitigen Lagerungen befindet sich der Schlitten 40, der die beiden Wellen 60 überbrückt und von diesen durchragt ist. Der Schlitten 40 umfasst als zentrales Element ein Schlittengehäuse 62, welches vorliegend aus einem bearbeiteten Metallblock besteht und welches jeweils vier von den Wellen 60 durchragte Gleitbuchsen 64 trägt. Dieser Gleitbuchsen 64 führen die Verschiebebewegung des Schlittens 40 relativ zu den Wellen 60. Zwischen den zwei von einer Welle 60 durchragten Gleitbuchsen 64 befindet sich eine Lagerhülse 66, die frei drehbar in dem Schlittengehäuse 62 angeordnet ist. Die Lagerhülse ist vorliegend als Zahnrad 66 mit auf dem Umfang angeordneten Zähnen ausgebildet.

Die Wellen 60 sind verdrehfest, jedoch gleitverschieblich in dem Zahnrad 66 gelagert. Hierzu sind an der Außenumfangsfläche der jeweiligen Wellen 60 zur Ausbildung eines Formschlusselementes sich in axialer Richtung der Wellen 60 erstreckende Grate oder Vertiefungen ausgeformt. Korrespondierende Ausbildungen weisen die Innenumfangsfläche des Zahnrades 66 sowie die Innenumfangsfläche der Gleitbuchsen 64 auf. Die Gleitbuchsen 64 umfassen an der Außenumfangsfläche der Wellen 60 anliegenden Gleitbuchsenschalen 68, welche über Wälzlager frei drehbar an dem Schlittengehäuse 62 gelagert sind. Die Wellen bilden danach die Führungsbahnen zur Führung des Schlittens aus und dienen auch der Übertragung des Drehmomentes des Stellelementantriebs 50.

Beiderseits der jeweiligen Zahnräder 66 befinden sich Gleitführungen 70 für Zahnstangen 72, die auf der anderen Seite der Wand 42 die Stempel 30, 32 für die Schweißbacken 22, 24 ausbilden. Es sind jeweils zwei Paare 74 von Zahnstangen 72 vorgesehen. Die zwei Zahnstangen 72 eines Paares 74 kämmen jeweils mit einem der Zahnräder 66. Die Zahnstangen 72 sind verdrehfest gegenüber dem Schlittengehäuse 62 gelagert, beispielsweise durch verdrehfeste Führung innerhalb der Gleitführungen 70 oder durch nicht dargestellte Querverbinder zum Verbinden von zwei Zahnstangen, die jeweils einer der Schweißbacken 22 oder 24 zugeordnet sind.

Die einander zugewandten Umfangsflächen der Zahnstangen 72 weisen eine Längsverzahnung 75 auf, die mit dem Zahnrad 66 kämmt. An der Traverse 44 befindet sich eine Umlenkung 76 für den Zahnriemen 56, der an dem Schlittengehäuse 62 befestigt ist.

An den stirnseitigen Enden des Schlittengehäuses 62 sind Kolbenstangen 78 von Druckzylindern 80 vorgesehen, welche an dem Antriebsmodul 48 montiert sind. Der Innendruck der Druckzylinder 80 ist so gewählt, dass die beiden Druckzylinder 80 das Eigengewicht des Schlittens 40 halten.

In Fig. 2 ist der Schlitten 40 in seiner oberen Position gezeigt. Bei Antrieb des Schlittenantriebs 52 wird der Schlitten 40 über den Zahnriemen 56 mitgenommen und in der Vertikalen verschoben. Die Gleitbuchsen 64 führen diese Verschiebebewegung des Schlittens 40 entlang der Wellen 60. Beim Erreichen der unteren Position wird der Stellelementantrieb 50 aktiviert. Hierdurch werden die Wellen 60 gedreht und diese Drehung wird über das Zahnrad 66 auf die Zahnstangen 72 übertragen. Beim Öffnen der Querschweißeinrichtung wird der der hinteren Schweißbacke 24 zugeordnete Stempel 32 zusammen mit der entsprechenden Zahnstange 72 nach hinten bewegt, wohingegen die andere Zahnstange 72 mit dem der vorderen Schweißbacke 22 zugeordneten Stempel 30 nach vorne bewegt wird. Die Querschweißeinrichtung 20 wird geöffnet. Der gefüllte Schlauchbeutel wird freigegeben. Nun wird der Schlittenantrieb 52 aktiviert und der Schlitten 40 in die obere Position verfahren. Danach werden durch gegenläufige Betätigung des Stellelementantriebes 50 die beiden Schweißbacken 22, 24 aufeinander zu bewegt. Hierzu kann vorgesehen sein, das durch Drehmomentbegrenzung des Stellelementantriebes 50 die Klemmkraft zum Klemmen des Füllstoffs begrenzt wird. Da im übrigen beide Antriebe 50, 52 nicht an der Vertikalbewegung des Schlittens 40 teilhaben, kann dieser relativ leicht ausgebildet sein.

Das Übertragungsmittel zeichnet sich vorzugsweise dadurch aus, dass es sich zwischen zwei ortsfesten Punkten erstreckt, zwischen denen auch der Schlitten angeordnet ist. Die vorliegende Erfindung ist nicht auf das gezeigte Ausführungsbeispiel beschränkt. So ist es beispielsweise ebenso möglich, das Übertragungsmittel, welches bei dem gezeigten Ausführungsbeispiel durch die Wellen 40 gebildet ist, durch einen Zahnriemen zu bilden, der wie der Zahnriemen 56 zwischen dem Antriebsmodul 48 und der Traverse 44 umläuft und mit einem drehbar an dem Schlitten 40 angeordneten Übertragungsrad zusammenwirkt. Alternativ kann auch ein Seilzug vorgesehen sein, welcher schlupffrei über ein drehbar an dem Schlitten gelagertes Übertragungsrad umgelenkt wird. Die erfindungsgemäße Wirkung einer Gewichtsverminderung des Schlittens tritt bereits dadurch ein, dass der Stellelementantrieb von dem Schlitten entkoppelt ist, d.h. nicht unmittelbar an dem Schlitten befestigt ist und das Drehmoment des Stellelementantriebs über wenigstens ein Übertragungsmittel übertragen wird. Dieses Übertragungsmittel kann die vorstehend in dem Ausführungsbeispiel beschriebene Welle 60 sein.

Die als Servomotoren ausgebildeten Stellelement- und Schlittenantriebe 50, 52 werden bei dem gezeigten Ausführungsbeispiel durch eine Wasserkühlung gekühlt. Hierzu ist eine Rückkühlungseinrichtung 82 in Form eines Fluid-Gas-Wärmetauschers in einem separaten Gehäuse 84 vorgesehen. Über Kühlwasserschläuche 86 kommuniziert diese Rückkühlungseinrichtung 82 mit einem in dem Schalt- und Antriebsschrank 4 angeordneten Wärmetauscher 88. Das von der Rückkühlungseinrichtung 82 abgekühlte und in den Wärmetauscher 88 eingeleitete Kühlwasser kühlt in dem Wärmetauscher zunächst Kühlelemente zur Abkühlung von Luft. Von dort strömt das Kühlwasser in Kühlmittelkammern, welche als Teil der Antriebe 50, 52 ausgebildet sind. Der Wärmetauscher sowie die Antriebe 50, 52 sind hinsichtlich des Kühlwassers in Reihe geschaltet. Die Antriebe 50, 52 sind parallel geschaltet. Vorliegend wird indes das erwärmte Kühlwasser von den Antrieben 50, 52 zunächst zurück in den Wärmetauscher 88 zurückgeführt. Dieser weist zwei benachbarte Schlauchanschlüsse 90 für den Kühlmittelein- und - ausgang auf, die im Bereich des Bodens 92 des Schrankes 4 in einen Verteiler 93 münden. Von dort wird das Kühlmittel parallel in die Antriebe 50, 52 geführt; von dort zu einem Sammelstück, von dort in den Wärmetauscher 88 und von dort schließlich zurück zu dem Verteiler 93.

Der Schalt- und Antriebsschrank weist eine Trennwand 94 auf, an welcher der Wärmetauscher 88 befestigt ist und welche den Schalt- und Antriebsschrank 4 in einen die Antriebe 50, 52 aufnehmenden Antriebsbereich 96 und einen Steuer- und Regelelemente 98 aufweisenden Steuerungsbereich 100 unterteilt. Die Trennwand 94 bildet zusammen mit den übrigen, den Antriebsbereich 96 umgebenden Wandungen des Schalt- und Antriebsschrankes eine untere fluiddichte Wanne aus. Oberhalb der Wanne weist die Trennwand 94 Konvektionsöffnungen 102 zum Austausch von warmer Luft aus dem Steuerungsbereich 100 in den Antriebsbereich 96, speziell zu dem Wärmetauscher 88 hin und von diesem zurück in den Steuerungsbereich 100 auf. Die in den Antriebsbereich 96 eintretende warme Luft wird durch an der Seitenwand des Wärmetauschers 88 ausgesparte Lufteintrittsöffnungen 104 in diesen eingeführt und tritt auf der Unterseite des Wärmetauschers, unmittelbar auf Höhe der oberen Konvektionsöffnung 102 aus dem Wärmetauscher 88 aus und in den Steuerungsbereich 100 ein.

Hierzu sind die Antriebe 50, 52 und der Wärmetauscher 88 über innere Kühlschläuche miteinander verbunden.

### Bezugszeichenliste

- 2: Maschinengestell
- 4: Schalt- und Antriebsschrank
- 6: Zuführeinrichtung
- 8: Zuführmotor
- 10: Umlenkrollen
- 12: Kragen
- 14: Füllrohr
- 16: Abzugsbänder
- 18: Längsschweißeinrichtung
- 20: Querschweißeinrichtung
- 22: vordere Schweißbacke
- 24: hintere Schweißbacke
- 26: Trichter
- 28: Pfeil (Bewegungsbahn)
- 30: Stempel
- 32: Druckstange
- 40: Schlitten
- 42: Wand
- 44: Traverse
- 46: Stützen
- 48: Antriebsmodul
- 50: Stellelementantrieb
- 52: Schlittenantrieb
- 54: Zahnriemen
- 56: Zahnriemen
- 58: Stelleantriebverteilerwelle
- 60: Welle
- 62: Schlittengehäuse
- 64: Gleitbuchse
- 66: Zahnrad
- 68: Gleitbuchsenschale
- 70: Gleitführung
- 72: Zahnstange
- 72a: Zahnstange, vordere Schweißbacke
- 72b: Zahnstange, hintere Schweißbacke
- 74: Zahnstangenpaar
- 75: Längsverzahnung
- 76: Umlenkung
- 78: Kolbenstange
- 80: Druckzylinder
- 82: Rückkühlungseinrichtung
- 84: Rückkühlungseinrichtungsgehäuse
- 86: Kühlwasserschlauch
- 88: Wärmetauscher
- 90: Schlauchanschlüsse
- 92: Boden
- 93: Verteiler
- 94: Trennwand
- 96: Antriebsbereich
- 98: Steuer- bzw. Regelelement
- 100: Steuerungsbereich
- 102: Konvektionsöffnung
- 104: Lufteintrittsöffnung

## Patentansprüche

1. Verpackungsmaschine mit einer Steuer- und Antriebseinrichtung (50, 52; 98), wobei die Antriebseinrichtung wenigstens einen fluidgekühlten Motor (50, 52) umfasst und die Steuereinrichtung in einem einem Maschinengestell (2) der Verpackungsmaschine zugeordneten Schaltschrank (4) angeordnet ist,
**gekennzeichnet durch**
einen in dem Schaltschrank (4) aufgenommenen, die Verlustwärme der Steuereinrichtung (98) aufnehmenden fluidgekühlten Wärmetauscher (88), und
eine mit dem Wärmetauscher (88) und dem Motor (50, 52) kommunizierende Rückkühlungseinrichtung (82) zum Abkühlen des Kühlfluids und
eine in dem Schaltschrank vorgesehene Trennwand, die den Schaltschrank in einen Steuerungselemente des Schaltschrankes aufnehmenden Bereich und einen den wenigstens einen Motor aufnehmenden Bereich unterteilt

2. Verpackungsmaschine nach Anspruch 1, **dadurch gekennzeichnet, dass** der Wärmetauscher (88) und der Motor (50, 52) hinsichtlich des Kühlfluids in Reihe geschaltet sind und dass an dem Maschinengestell (2) der Verpackungsmaschine lediglich ein Kühlfluideingang (90) und lediglich ein Kühlfluidausgang (90) angeordnet sind.

3. Verpackungsmaschine nach Anspruch 1 oder 2, **dadurch gekennzeichnet, dass** der Kühlfluideingang und der Kühlfluidausgang jeweils einen Schlauchanschluss (90) aufweisen.

4. Verpackungsmaschine nach einem der vorherigen Ansprüche, **dadurch gekennzeichnet, dass**
der Wärmetauscher in dem die Steuerungselemente des Schaltschrankes aufnehmenden Bereich angeordnet ist und Kühlfluid führende Schläuche durch die Trennwand zu dem wenigsten einen Servomotor hindurchgeführt sind.

5. Verpackungsmaschine nach einem der Ansprüche 1 bis 3, **dadurch gekennzeichnet, dass** der Wärmetauscher (88) in dem den wenigstens einen Servomotor (50, 52) aufnehmenden Bereich angeordnet ist und in der Trennwand (94) Konvektionsöffnungen (102) ausgespart sind, die eine konvektive Wärmeübertragung von dem die Steuerungselemente (98) aufnehmenden Bereich (100) zu dem den wenigstens einen Motor (50, 52) aufnehmenden Bereich (96) ermöglichen.

6. Verpackungsmaschine nach Anspruch 5, **dadurch gekennzeichnet**, der Trennwand (94) wenigstens ein Mittel zur Erzeugung einer erzwungenen Konvektion zugeordnet ist.

7. Verpackungsmaschine nach Anspruch 5 oder 6, **dadurch gekennzeichnet, dass** der Kühlfluideingang (90) und der Kühlfluidausgang (90) dem den Motor (50, 52) aufnehmenden Bereich (96) zugeordnet sind.

8. Verpackungsmaschine nach einem der vorherigen Ansprüche, **dadurch gekennzeichnet, dass** der Schaltschrank (4) in das Maschinengestell (2) integriert ist und dass der Kühlfluideingang und der Kühlfluidausgang an dem Boden (92) des Schaltschrankes (4) angeordnet sind und diesen unterseitig überragen.

## Claims

1. Packaging machine with a control and drive device (50, 52; 98), wherein the drive device comprises at least one fluid-cooled motor (50, 52) and the control device is disposed in a switch cabinet (4) which is associated with a machine frame (2) of the packaging machine,
**characterised by**
a fluid-cooled heat exchanger (88) which is accommodated in the switch cabinet (4) and absorbs the dissipation heat of the control device (98), and
a recooling device (82) for cooling the cooling fluid which communicates with the heat exchanger (88) and the motor (50, 52), and
a partition wall which is provided in the switch cabinet to divide the switch cabinet into an area accommodating control elements of the switch cabinet and an area accommodating the at least one motor.

2. Packaging machine according to Claim 1, **characterised in that** the heat exchanger (88) and the motor (50, 52) are connected in series with respect to the cooling fluid, and that only one cooling fluid inlet (90) and only one cooling fluid outlet (90) are disposed at the machine frame (2) of the packaging machine.

3. Packaging machine according to Claim 1 or 2, **characterised in that** the cooling fluid inlet and the cooling fluid outlet in each case have a hose connection (90).

4. Packaging machine according to any one of the preceding Claims, **characterised in that** the heat exchanger is disposed in the area accommodating the control elements of the switch cabinet, and hoses carrying cooling fluid are passed through the partition wall to the at least one servomotor.

5. Packaging machine according to any one of Claims 1 to 3, **characterised in that** the heat exchanger (88) is disposed in the area accommodating the at least one servomotor (50, 52), and convection openings (102) are made in the partition wall (94), which openings permit a convective heat transfer from the area (100) accommodating the control elements (98) to the area (96) accommodating the at least one motor (50, 52).

6. Packaging machine according to Claim 5, **characterised in that** at least one means for generating forced convection is associated with the partition wall (94).

7. Packaging machine according to Claim 5 or 6, **characterised in that** the cooling fluid inlet (90) and the cooling fluid outlet (90) are associated with the area (96) accommodating the motor (50, 52).

8. Packaging machine according to any one of the preceding Claims, **characterised in that** the switch cabinet (4) is integrated into the machine frame (2), and that the cooling fluid inlet and the cooling fluid outlet are disposed at the floor (92) of the switch cabinet (4) and project beyond this at the underside.

## Revendications

1. Machine d'emballage avec un dispositif de commande et un dispositif d'entraînement (50, 52 ; 98), le dispositif d'entraînement comprenant au moins un moteur refroidi par fluide (50, 52), et le dispositif de commande étant disposé dans une armoire de distribution (4) associée à un châssis (2) de la machine d'emballage,
**caractérisée par** un échangeur de chaleur refroidi par fluide (88) qui est logé dans l'armoire de distribution (4) et qui reçoit la chaleur dissipée du dispositif de commande (98), par un dispositif de refroidissement en circuit fermé (82) qui communique avec l'échangeur de chaleur (88) et le moteur (50, 52) et qui est destiné à refroidir le fluide de refroidissement, et par une cloison qui est prévue dans l'armoire de distribution et qui divise celle-ci en une zone recevant les éléments de commande de l'armoire et une zone recevant le ou les moteurs.

2. Machine d'emballage selon la revendication 1, **caractérisée en ce que** l'échangeur de chaleur (88) et le moteur (50, 52) sont montés en série, pour le fluide de refroidissement, et **en ce qu'**il est prévu sur le châssis (2) de la machine d'emballage une seule entrée de fluide de refroidissement (90) et une seule sortie de fluide de refroidissement (90).

3. Machine d'emballage selon la revendication 1 ou 2, **caractérisée en ce que** l'entrée de fluide de refroidissement et la sortie de fluide de refroidissement ont chacune un raccordement de tuyau (90).

4. Machine d'emballage selon l'une des revendications précédentes, **caractérisée en ce que** l'échangeur de chaleur est disposé dans la zone qui reçoit les éléments de commande de l'armoire de distribution, et des tuyaux amenant le fluide de refroidissement traversent la cloison pour arriver dans le ou les servomoteurs.

5. Machine d'emballage selon l'une des revendications 1 à 3, **caractérisée en ce que** l'échangeur de chaleur (88) est disposé dans la zone qui reçoit le ou les servomoteurs (50, 52), et il est prévu dans la cloison (94) des ouvertures de convexion (102) qui permettent une transmission de chaleur par convexion de la zone (100) qui reçoit les éléments de commande (98) vers la zone (96) qui reçoit le ou les moteurs (50, 52).

6. Machine d'emballage selon la revendication 5, **caractérisée en ce qu'**au moins un moyen pour produire une convexion forcée est associé à la cloison (94).

7. Machine d'emballage selon la revendication 5 ou 6, **caractérisée en ce que** l'entrée (90) et la sortie (90) de fluide de refroidissement sont associées à la zone (96) qui reçoit le moteur (50, 52).

8. Machine d'emballage selon l'une des revendications précédentes, **caractérisée en ce que** l'armoire de distribution (4) est intégrée dans le châssis de machine (2) et **en ce que** l'entrée et la sortie de fluide de refroidissement sont disposées sur le fond (92) de l'armoire (4) et dépassent du côté inférieur de celui-ci.
